# EUROPEAN PATENT APPLICATION

(11) **EP 2 602 727 A1**
(43) Date of publication of application: **12.06.2013**
(21) Application number: 12194424.3
(22) Date of filing: 27.11.2012
(51) Int. Cl.: G06F 17/30

(54) **Method and system of rapid data transfer from source database to destination database**

(30) Priority: 06.12.2011 TR 201112086
(71) Applicant: KREA ICERIK HIZMETLERI VE PRODUKSIYON ANONIM SIRKETI, Istanbul (TR)
(72) Inventor: Kubilay, Ufuk, 34353 Istanbul (TR)
(74) Representative: Iskender, Ibrahim

(57) **Abstract**

A method and system of enabling considerable amount of data transfer in a rapid manner from a source database, preferably Oracle® to a destination database, preferably Sybase IQ® is disclosed. Data are exported from the source database into files using an export process (e.g. Oracle® data pump). The exported files are converted to text files, which are then used to upload data into the destination database.

## Description

### Technical Field

This invention is related to a method of data transfer that ensures rapid transfer of large amount of data from a source database, preferably from Oracle®, to a destination database, preferably to Sybase IQ®.

### Prior Art

Particularly, while developing data warehouse systems data are collected from different sources and recorded in destination database. The destination and source databases in which these processes take place can be the same, or they can be different. When the data are to be recorded in a different database, required changes are made on the data according to the format for using the data. After completing the data transformation, data are recorded in the destination database. The results are integrated in a destination system to enable the users to make analysis they prefer, on these data.

Data warehouse systems are updated regularly. Hundreds of processes manipulate large amount of data during update times and thus, prepare destination systems in a timely manner. Rapid data processing and transfer is very important during the update of processes which run to make system ready in the determined time intervals, and all sources are tried to be used in the most efficient way.

There exists an architecture where the source database is Oracle® and where destination database is Sybase IQ®. Since source and destination databases are different from each other in these kinds of databases, different methods are used for data transfer. In most of these applications, firstly, data to be transferred from Oracle® database is written on a text file and then it is recorded in Sybase IQ® database. During this process, although loading data to Sybase IQ® database is rapid, converting the data to be transferred from the Oracle® database into text file takes a long time and this effects total duration of data transfer negatively.

Oracle offers data pump feature to be used in the processes for rapid data transfer and backup. With this method, data can be recorded in an Oracle specific file and be loaded to another Oracle® database rapidly. At the same time, resources from the source system are used less while creating this file. However, the file created can only be used while transferring data from Oracle® database to Oracle® database.

China patent numbered CN 101266606 that is present in the prior art reveals a data transfer method based upon Oracle® databases. The method consists of "prebuilt mv", "trigger+procedure" and "trigger+sql*loader+" programs. Inter-platform and interversion data transfer can be realized by using "Prebuilt mv" and "trigger+procedure" programs. Data transfer between databases with different character sets can be realized in the forms of text files by using "Trigger+sql*loader+" program.

United Nations patent numbered US 2010179967 that is present in the prior art reveals a method of data transfer between the databases. In this method, there are matching sources and destinations. A source reaches a destination that uniquely matches with it. This matching method (MAP) is configured by using SOID (Standard of Interface Department) syntax. If the database to which the data is transferred, is not Oracle, a new category is created and the matching based transfer method is reregistered. This method supports nearly all platforms.

### Brief Description of Invention

The aim of this invention is to provide a data transfer method which provides rapid data transfer from source database (Oracle) to destination database (Sybase IQ).

The other aim of this invention is to provide a data transfer method which provides a rapid data transfer by using the source database resources at the minimum level.

### Detailed Description of Invention

The data transfer method which is provided for achieving the aim of this invention is indicated in the figures attached. These figures stand for the followings;

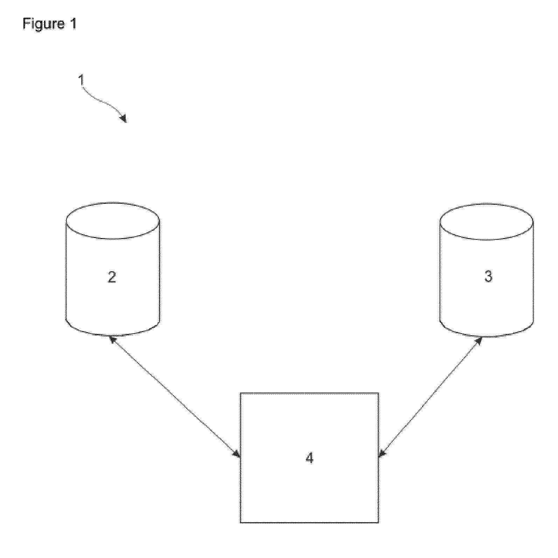

Figure 1- The schematic configuration of the data transfer system
Figure 2- The flowchart illustrating data transfer method

The parts in the figures are numbered one by one and the corresponding terms of these numbers are given below.
1. Data transfer system
2. Source database
3. Destination database
4. Control unit
100. Data transfer method
EXPK: Source file in the special format of source (Oracle) database
TEXK: Source file in text format

The data transfer system (1) which enables to transfer data between the databases and to convert data to a different format which contains;
- at least one source database (2) which is structured for receiving data,
- at least one control unit (4) which is structured for receiving the data from source database (2) as EXPK file and for converting the data received from source database (2) to TEXK file,
- at least one destination database (3) which is structured for uploading the TEXK file.

In the data transfer system (1) which is the subject of the invention, the Oracle® is used preferably as a source database (2) and the Sybase IQ® is used as a destination database (3). In the source database (2) the EXPK files including the required data are created through data pump method. The data in the source database (2) should be separated and saved in the destination database (3) in a readable manner. In order to rapidly save the data in the destination database (3), the data should be in text format. In order to rapidly receive the data from the source database (2), this data should be in EXPK file format. The control unit (4) requires to create data to be transferred to the destination database (3) from the source database (2) through data pump method in a manner linked to the temporary external table in its unique file format (EXPK). The source database (2) realizes this process through creating a temporary external table. The source database (2) creates a source file EXPK linked with the temporary external table (EXPK). Afterwards, the control unit (4) receives the source file (EXPK) from the source database (2) and breaks the link between the file and the source database (2). The data to be used is within the control unit (4) as a source file (EXPK) anymore.

The source file (EXPK) which is created by the source database (2) consists of two basic sections as metadata (metadata, Xml) and data. Metadata section includes information which columns the records in the source file (EXPK) contain, and other relevant information regarding the columns. The data section consists of records. The records in the data section are separated into sections (record) as record length, column data and record-end statement. Column data consists of sections such as column length and column content which follow one another. The column content is processed according to the data type given regarding the column in the metadata segment and is converted to the text format requested. The entire data section is processed in the same manner, and the source file (EXPK) taken from the source database (2) is converted to the source data file (TEXK) in the text format by the control unit (4). The control unit (4) uploads the source data file (TEXK) which is produced, to the destination database (3).

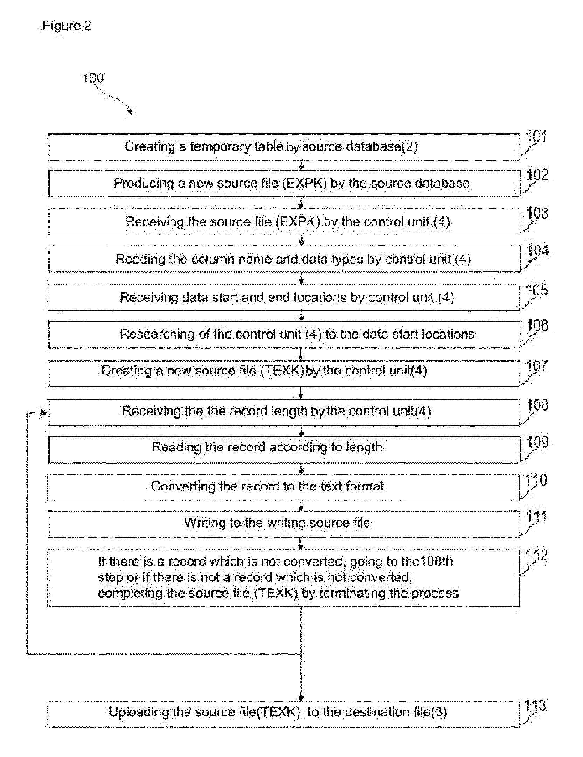

Data transfer method (100), which is the subject matter of the invention, ensuring that data in the source database (2) are received, converted and saved in the destination database rapidly includes the following steps:
- The control unit (4), by means of its data pump feature for file conversion, requests (101) the source database (2) to create a temporary external table (101),
- The source database (2) produces a source file (EXPK) in a unique file format in the course of creating an external table (102),
- The control unit (4) receives the source file (EXPK) from the source database (2)(103),
- The control unit (4) reads the column names and column data types from the metadata section of the source file (EXPK) (104),
- The control unit (4) receives the data start and end locations on the source file (EXPK)(105),
- The control unit (4) locates to the data start location in the source file (EXPK)(106),
- The control unit (4) creates a new blank text source file (TEXK) to write the records which are converted (107),
- The control unit (4) receives the record length (108),
- The control unit (4) reads the record according to its length (109),
- The control unit (4) converts the record to text format according to the types and length of the columns (110),
- The control unit (4) writes the record, which has been converted to text format, into the text resource file (TEXK)(111),
- If there are any records left unconverted to the text format, step 108 is applied; if not, the action needs to be finished and the source file (TEXK) needs to be completed (112),
- The control unit (4) uploads the source file (TEXK) to the destination database (3) (113) (Figure 2).

In the conversion process, the control unit (4) identifies the record (sections) included in the source file (EXPK) first. Then, the control unit (4) connects to those record sections, takes the data and converts it to text format and creates a new record. The control unit (4) converts each record included in the record file to text format and produces a new record file (TEXK). Next, the control unit (4) saves this record file (TEXK) in the destination database (3).

Considering these basic concepts, the development of various applications of data transform technique and system, which is the subject matter of the invention, is possible. Invention cannot be restricted to the examples given here, and should be evaluated according to the following claims.

## Claims

1. A data transfer method which takes and converts the data in the source database (2) and ensures it to be saved in the destination database rapidly, and which is **characterized by** the following methods (100);
- Requesting from source database (2) to create a temporary external table (101) by means of data pump feature for file conversion by the control unit (4),
- Producing a resource file (EXPK) in a unique file format (102) by the source database (2) while an external table is created,
- Receiving the resource file (EXPK) (103) from the source database (2) by the control unit (4),
- Reading the column names and column data types (104) from metadata section of the resource file (EXPK) by control unit (4).
- Receiving data start and end locations on the resource file (105) by the control unit (4).
- Locating the control unit (4) to the data start location (106) within the resource file (EXPK)
- Creating a new blank text source file (TEXK) (107) by the control unit (4) in order to write the records converted to text format,
- Receiving the record length (108) by the control unit (4).
- Reading the record (109) by the control unit (4) according to the record length.
- Converting (110) the record to the text format by the control unit (4) according to the column types and column lengths.
- Writing the record (111) converted to the text format into the text resource file (TEXK) by the control unit (4).
- Returning to Step 108, if there is any record not converted to the text format; and If not, completing the resource file (TEXK) (112) by terminating the process,
- Uploading the resource file (TEXK) (113) to the destination database (3) by the control unit (4).

2. A data transfer system (1) which enables to transfer data between the databases and to convert data to a different format and **it is characterized in that** it contains,
- at least one source database (2) which is structured for receiving data,
- at least one control unit (4) which is structured for receiving the data from source database (2) as EXPK file and for converting the data received from source database (2) to TEXK file,
- at least one destination database (3) which is structured for uploading the TEXK file.

3. A data transfer system (1), according to claim 2, is **characterized by** the source database (2) adapted to produce the EXPK files which contain the requested data via data pump method.

4. A data transfer system (1), according to Claims 2 and 3, is **characterized by** the control unit (4) adapted to receive the resource file (EXPK) from the source database (2) and break-off the link between the file and the source database (2).

5. A data transfer system (1), according to Claims 2, 3 and 4, is **characterized by** the control unit (4) adapted to convert the resource file (EXPK) received from the source database (2) to the resource data file in text format (TEXK) and to upload this file (TEXK) to the destination database (3).
